# EUROPÄISCHE PATENTANMELDUNG

(11) **EP 2 071 091 A2**
(43) Veröffentlichungstag der Anmeldung: **17.06.2009**
(21) Anmeldenummer: 08105977.6
(22) Anmeldetag: 12.12.2008
(51) Int. Cl.: E04B 1/68

(54) **Dehnfugenband**

(30) Priorität: 14.12.2007 CH 19422007; 04.04.2008 CH 5222008
(71) Anmelder: Schoop + Co. AG, 5405 Baden-Dättwil (CH)
(72) Erfinder: Joder, Arnold, 6460, Altdorf (CH)
(74) Vertreter: Spierenburg, Pieter

(57) **Zusammenfassung**

Es wird ein neues Dehnfugenband (1) aus elastischem Material beschrieben mit einem dehnbaren Mittelabschnitt (2) und zwei beiderseits daran anschliessenden Flanschbereichen (3, 4), wobei im dehnbaren Mittelabschnitt (2) eine von einer Trennschicht (9) gebildete flache Kammer (8, 8') vorgesehen ist.

## Beschreibung

Die Erfindung betrifft ein Dehnfugenband nach dem Oberbegriff des Patentanspruchs 1 und ein Verfahren zu dessen Herstellung.

Ein solches Dehnfugenband aus elastischem Material, insbesondere Kunstgummi, ist beispielsweise aus EP-A-0 440 870 bekannt und besitzt einen Mittelabschnitt zum Überbrücken einer Baufuge sowie zwei seitliche Randabschnitte, an denen praktisch undehnbare Seitenstreifen als Haftvermittler zum Baukörper angebracht sind. Die Seitenstreifen sind auf beiden Oberflächen der Randabschnitte aufgebracht bzw. aufgepresst, und mit deren Längskanten bündig. Die Seitenstreifen können aus Gewebe, Vlies, bituminösen Massen oder einer Kombination dieser Materialien bestehen. Sie können am Mittelabschnitt abgestuft oder in das Material der Randabschnitte eingepresst sein, um eine günstige Querzugeinleitung bzw. Abdichtung zu ermöglichen.

Fugenbänder werden zur Überbrückung von Dehnfugen in Abdichtungen und zwischen Bauteilen eingesetzt. Die Seitenstreifen werden sandwichartig mittels Flamme in die Flächenabdichtung geflämmt oder mit einem Epoxid-Kleber direkt auf den Untergrund geklebt. Die erhitzten und angeschmolzenen oder die geklebten Bereiche werden dann lediglich zusammengepresst, um die Klebeverbindung und Abdichtung zu bilden. Nach dem Einbau der Dehnfugenbänder ist eine Überprüfung der Dichtigkeit gegen Wasser nicht möglich, so dass die Verlegung und Einbau der Dehnfugenbänder mit grösster Sorgfalt vorgenommen werden muss. Bei einer späteren Verletzung der Flächenabdichtung ist eine Reparatur relativ aufwändig, da grössere Abschnitte entfernt und wieder eingesetzt werden müssen. Im eingebauten Zustand ist die Flächenabdichtung wegen Erdaufschüttungen und dergleichen auch schwer zugänglich.

Der vorliegenden Erfindung liegt nun die Aufgabe zugrunde, ein Dehnfugenband derart weiterzubilden, welches nach erfolgter Einbau des Dehnfugenbandes eine Überprüfung der Dichtigkeit erlaubt und eine einfachere Reparatur von undichten Stellen ermöglicht.

Diese Aufgabe wird durch ein Dehnfugenband mit den Merkmalen des Patentanspruchs 1 gelöst.

Die Erfindung hat den Vorteil, dass das Dehnfugenband im eingebauten Zustand auf seine Dichtigkeit überprüft werden kann. In einer weiteren Ausführung kann gegebenenfalls durch eindringendes Wasser eine Selbst-Reparatur erfolgen.

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: ein erste Ausführung des Dehnfugenbandes,
- Fig. 2: eine zweite Ausführungsform des Dehnungsfugenbandes,
- Fig. 3: eine dritte Ausführungsform des Dehnfugenbandes,
- Fig. 4: eine vierte Ausführungsform des Dehnfugendbandes,
- Fig. 5: eine erste Variante der vierten Ausführungsform,
- Fig. 6: eine zweite Variante der vierten Ausführungsform,
- Fig. 7: eine dritte Variante der vierten Ausführungsform
- Fig. 8: schematisch eine Rotations-Vulkanisationsanlage,
- Fig. 9: schematisch eine Doppelbandpresse, und
- Fig. 10: einen Querschnitt durch eine zweiteilige Quetschform.

In den Figuren sind für dieselben Elemente jeweils dieselben Bezugszeichen verwendet, wenn nicht anders angegeben.

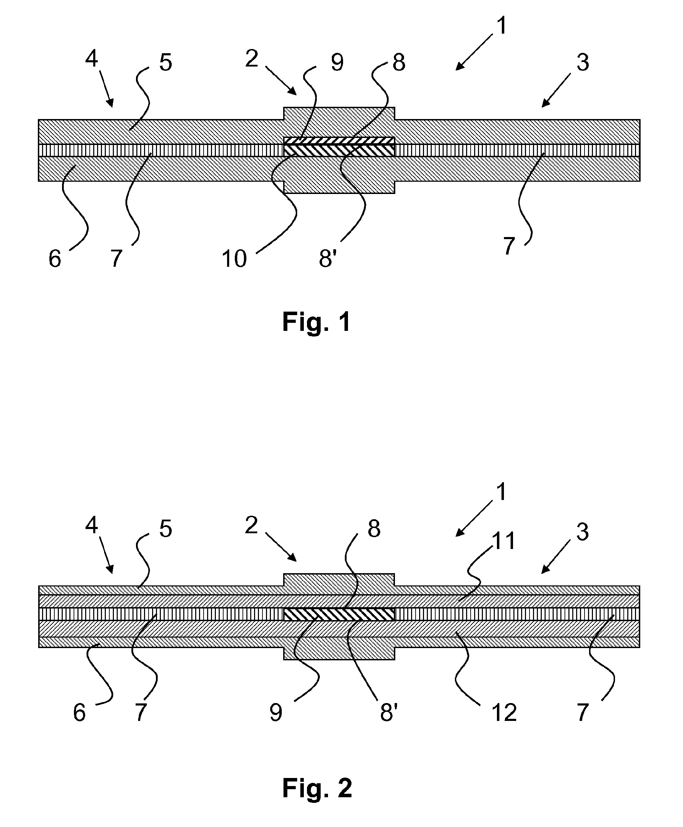

In der Figur 1 zeigt eine erste Ausführung eines Dehnfugenbandes 1 im Querschnitt mit einem verstärkten Mittelabschnitt oder Dehnbereich 2 und zwei daran anschliessenden Flanschbereichen 3 und 4. Das Dehnfugenband 1 ist aus zwei Bahnen 5 und 6 aus einem Butyl-Elastomer geformt und weist in den Flanschbereichen 3 und 4 einen nicht-dehnbaren Kern 7 aus einem mit Copolymer, Polypropylen oder Polyäthylen beschichteten Substrat oder einem Glasfasersubstrat auf, welche aus einem Vlies, einem Gewebe oder einem Gelege bestehen können. Im Dehnbereich 2 ist einerseits eine flache Kammer 8 zwischen einer Trennschicht 9 von einer nicht-haftenden Folie, insbesondere einem silikonbeschichteten Trennpapier oder einem Textilgewebe, und der oberen Bahn 5 und andererseits eine flache Kammer 8' zwischen der Trennschicht 9 und einem Substrat aus einem Quellmaterial 10 vorgesehen. Das Quellmaterial 10 besteht vorzugsweise aus Natriumbentonit und Butylkautschuk, oder aus Acryl-Polymer, oder aus einer Kautschuk-Polymermischung. Wie ersichtlich ist die Dicke des Dehnbereiches 2 etwas grösser als die Dicke der beiden Flanschbereiche 3 und 4, und somit weist das Dehnfugenband 1 in diesem Bereich eine erhöhte Materialstärke auf.

In der Praxis kann nun das in einer Bitumenabdichtung eingebaute Dehnfugenband 1 mittels Druckluft oder unter Vakuum auf Dichtigkeit überprüft werden, indem über eine längere Zeit kein Druckabfall festgestellt wird. Wenn jedoch eine Verletzung des Dehnfugenbandes 1 im Dehnbereich 2 festgestellt wird, kann durch Wassereinwirkung das Quellmaterial 10 aufquellen und so die undichte Stelle abdichten. Da das Quellmaterial 10 von Butyl-Elastomer umschlossen ist, kann das Wasser nicht mehr entweichen und bleibt das Quellmaterial 10 in aufgequollenem Zustand, d.h. die Selbst-Reparatur der undichten Stelle ist dauerhaft.

Mit dem erfindungsgemässen Dehnfugenband 1 ist im Dehnbereich 2 durch den Einbau des Quellmaterials 10 eine erhöhte Materialstärke vorhanden, was eine zusätzlicher Schutz gegen Verletzungen des Dehnfugenbandes bewirkt. Durch die Ausbildung der Flanschbereiche 3 und 4 aus einem Butyl-Elastomer mit einem Kern 7 aus einem Copolymer-Substrat oder Glasfasergelege sind diese biegsam und kann das Dehnfugenband 1 auch sehr gut in Eckbereichen verlegt werden.

In Fig. 2 ist eine zweite Ausführung des Dehnfugenbandes 1 dargestellt, bei welchem die Bahnen 5 und 6 aus Butyl-Elastomer eine geringere Dicke aufweisen als in der ersten Ausführung, jedoch auf der Innenseite mit je einer weiteren Bahn 11 und 12 aus einem Ethylen-Propylen-Dien-Kautschuk (EPDM-Elastomer) versehen ist. In diesem Fall ist die Trennschicht 9 mit etwa derselben Dicke zwischen den in beiden Flanschbereichen angeordneten nicht-dehnbaren Kernen 7 vorgesehen. Die erste oder obere flache Kammer 8 wird zwischen der Oberseite der Trennschicht 9 und der oberen EPDM-Bahn 11 und die zweite oder untere Kammer 8' zwischen der Unterseite der Trennschicht 9 und der unteren EPDM-Bahn 12 gebildet. Die beiden Kammern 8 und 8' sind durch hier nicht-dargestellte Einschnitte in die Trennschicht 9 miteinander verbunden. Die Trennschicht 9 kann aus einem silikonbeschichteten Papier oder aus einem geeigneten nicht-haftenden Substrat bestehen, beispielsweise einem Glasfasergewebe.

Bei dieser zweiten Ausbildung lässt sich ebenfalls die Dichtigkeit des eingebauten Dehnfugenbandes 1 mittels Druckluft oder unter Vakuum überprüfen. Falls eine Undichtigkeit festgestellt wird, kann diese mittels eine Injektion eines Kittmaterials in die beiden Kammern 8 und 8' gestopft und so wieder abgedichtet werden.

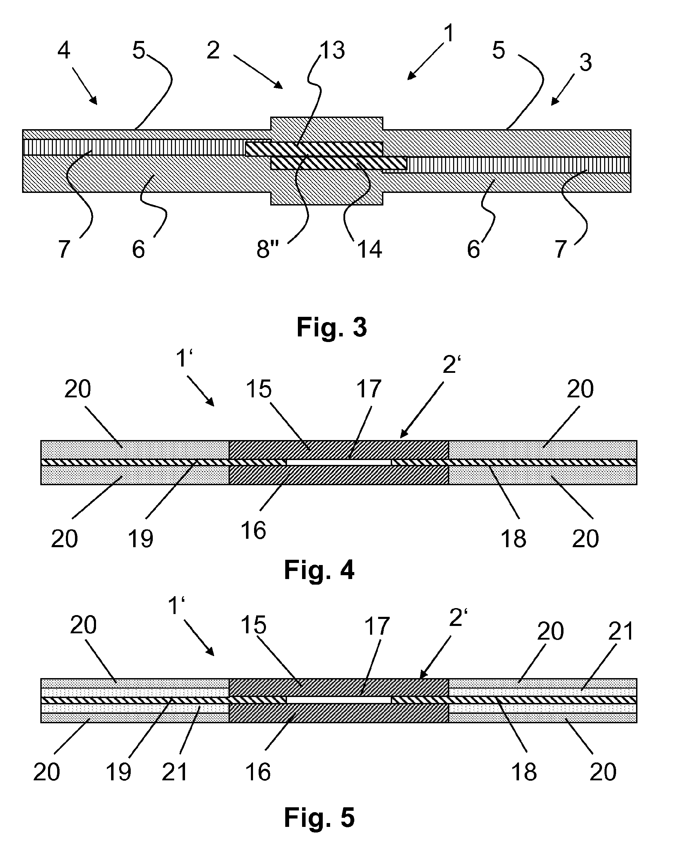

In Fig. 3 ist eine dritte Ausbildung des Dehnfugenbandes 1 im Querschnitt gezeigt, wobei die Bahnen 5 und 6 aus Butyl-Elastomer je eine Stufe unmittelbar anschliessend am Mittelabschnitt 2 aufweisen, d.h die Bahn 5 ist links in der Figur gesehen schmäler ausgebildet als rechts und umgekehrt die Bahn 6 ist rechts in der Figur schmäler ausgebildet als links. Zur Verstärkung der beiden Flanschbereiche 3 und 4 ist je ein nicht-dehnbarer Kern 7 aus einem Copolymer, Polypropylen oder Polyäthylen beschichteten Substrat, oder einem Copolymer-, Polypropylen- oder Polyäthylen-Film, oder einem Glasfasersubstrat, insbesondere Glasfasergelege, vorgesehen. Ferner ist im Mittelabschnitt ein oberes nicht-haftendes Substrat 13 einseitig am Kern im linken Flanschbereich 4 befestigt und ein unteres nicht-haftendes Substrat 14 ist einseitig am Kern im rechten Flanschbereich 3 befestigt. Somit liegen die beiden Substrate 13 und 14 lose aufeinander und bilden damit eine flache Kammer 8". Die beiden Substrate 13 und 14 können dabei auf der Innenseite, d.h. auf der der Kammer 8" zugeordnete Seite, eine Beschichtung aus einem geeigneten nicht-haftenden Kunststoff aufweisen. Die Substrate 13 und 14 können aber auch aus einer Kunstofffolie oder einem dünnen Metallblech bestehen.

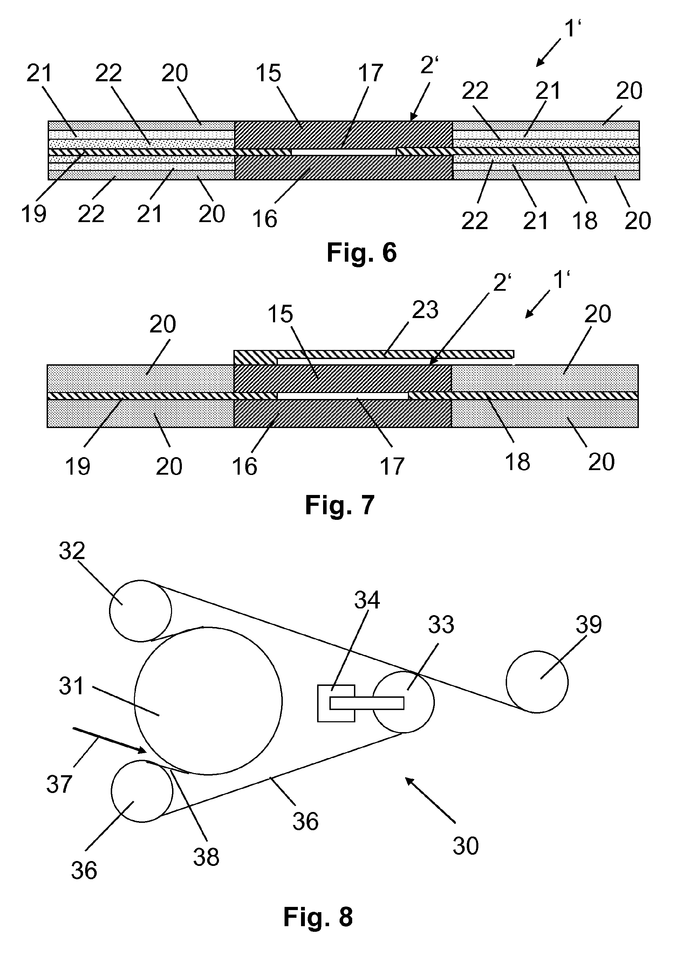

In den Figuren 4 bis 7 ist eine vierte Ausführung des Dehnfugenbandes 1' dargestellt, bei welchem ein Mittelabschnitt 2' von zwei übereinander gelegten Bahnen 15 und 16 aus einem Elastomer oder Kunststoff gebildet ist, die in ihren Randbereichen gegenseitig über einem nicht-dehnbaren Seitenstreifen 18 und 19 miteinander verbunden sind, so dass eine flache Kammer 17 gebildet ist. Die nicht-dehbaren Seitenstreifen 18 und 19 sind aus einem Textilgewebe, aus mit Copolymer, Polypropylen oder Polyäthylen beschichtetem Substrat, oder aus einem dünnen Metallblech oder einem mit Copolymer beschichteten dünnen Metallblech hergestellt. Die beiden Seitenstreifen 18 und 19 bilden sodann oben und unten einen Verbund 20 mit einem Baukörper oder einem Substrat wie beispielsweise Bitumen. In Figur 5 sind die Seitenstreifen 18 und 19 zusätzlich oben und unten mit einer vlies- oder gewebeartigen Auflage 21 versehen, die insbesondere aus einem Polyester-Vlies gebildet ist. In Figur 6 ist eine weitere Variante dargestellt, in welcher auf den Auflagen 21 eine weitere Schicht 22 aus einem Elastomer oder Kunststoff angebracht ist. In Figur 7 ist eine Variante der Ausführung der Figur 4 dargestellt, bei welcher auf der Aussenseite des Mittelabschnittes 2 ein dünnes Metallblech 23 als mechanischer Schutz vorgesehen ist.

Die Überprüfung der Dichtigkeit der dritten und vierten Ausbildung erfolgt in derselben Weise wie bei den beiden vorhergehenden Ausführungen.

Die Ausbildung des Dehnfugenbandes 1 aus einem Elastomer oder Kunststoff erlaubt auch eine besonders einfache Verlegetechnik mit Bitumen oder mit den an sich bekannten Klebstoffen.

In Fig. 8 ist rein schematisch eine Rotations-Vulkanisationsanlage 30 mit einer Heiztrommel 31, einer Umlenktrommel 32, einer Andrücktrommel 33 mit einem Spannelement 34 und einer Umlenktrommel 35 gezeigt. Ein durchgehendes Stahlband 36 umschlingt die Heiztrommel 31 mit einer Umschlingung von etwa 270° und wird dann über die Umlenktrommel 32 zur Andrücktrommel 33 und zurück über die Umlenktrommel 35 wieder zur Heiztrommel 31 geführt. Zur Herstellung des Dehnfugenbandes 1 bzw. 1' werden zwei Bahnen 5 und 6 bzw. 15 und 16 aus einem elastischen Material aufeinandergelegt. Für die Ausführungen nach den Figuren 1 bis 3 wird eine Trennschicht 9 zwischen den beiden Bahnen 5 und 6 etwa mittig dazu angeordnet. Diese beiden Bahnen 5 und 6 bzw. 15 und 16 - mit einem Pfeil 37 angedeutet - werden in den Zwickel 38 zwischen der Umlenktrommel 35 und der Heiztrommel 31 eingeführt und so durch die Rotations-Vulkanisationsanlage 30 geleitet. Anschliessend wird das fertig vulkanisierte Dehnungsfugenband 1 bzw. 1' auf einer Rolle 39 aufgewickelt. Die Vulkanisation erfolgt bei einem Druck von etwa 4 bis 6 bar und einer Temperatur der Heiztrommel 31 von 150 bis 185 °C.

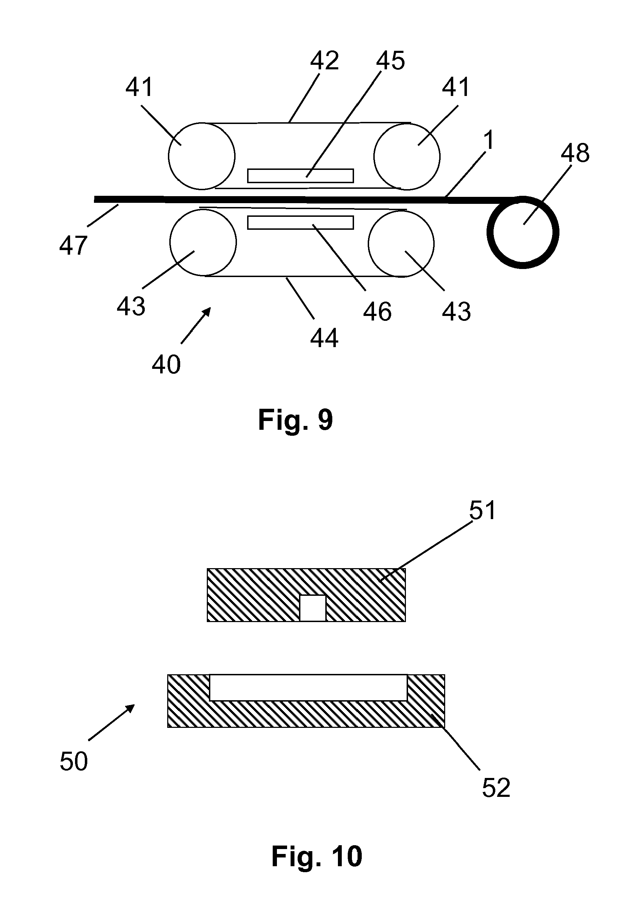

In Fig. 9 ist eine Doppelbandpresse 40 mit zwei oberen Trommeln 41 und einem oberen Anpressband 42 und mit zwei unteren Trommeln 43 und einem unterem Anpressband 44 gezeigt. Ein oberes Druckkissen 45 und ein unteres Druckkissen 46 sorgen für einen gleichmässigen Anpressdruck im gesamten Pressbereich. Eine solche Doppelbandpresse 40 wird beispielsweise von der Firma Hymmen GmbH, DE-33613 Bielefeld angeboten. Ähnlich wie beim vorhergehende Verfahren werden zwei Bahnen 5 und 6 aus einem gummi-elastischem Material mit einer dazwischen liegenden Trennschicht 9 bzw. zwei Bahnen 15 und 16 ohne Trennschicht aufeinandergelegt und so als loses zusammengestelltes Band 47 in die Doppelbandpresse 40 eingeführt, wo das Band 47 bei einem Druck von etwa 4 bis 6 bar und einer Temperatur von 150 bis 185 °C an den Flanschbereichen vulkanisiert wird. Das fertige Dehnungsfugenband 1 bzw. 1' wird dann auf eine Rolle 48 aufgewickelt.

In Fig. 10 ist eine zweiteilige Quetschform 50 mit einem stempelförmigen Oberteil 51 und einem wannenförmigen Unterteil 52 dargestellt, welche eine Länge von drei Metern aufweist. Ähnlich wie bei den oben beschriebenen Verfahren zwei Bahnen aus gummi-elastischem Material mit einer dazwischenliegenden Trennschicht in die Quetschform eingelegt und mittels einer hydraulischen Presse bei einem spezifischen Flächendruck von 20 bis 80 kg/cm² und einer Temperatur von 150 bis 185 °C während einigen Minuten an den Flanschbereichen vulkanisiert. Eine solche hydraulische Presse wird beispielsweise von der Fa. Wickert Maschinenbau GmbH, DE-76829 Landau in der Pfalz vertrieben. Sodann wird das fertige Dehnfugenband 1 bzw. 1' um weitere 3 Meter verschoben und der nächste Abschnitt vulkanisiert. Anschliessend wird das fertige Dehnfugenband 1 bzw. 1' auf eine Rolle aufgerollt, wobei dieser Vorgang mit dem Pressen intermittierend erfolgt.

## Patentansprüche

1. Dehnfugenband (1; 1') aus elastischem Material mit einem dehnbaren Mittelabschnitt (2; 2') und zwei beiderseits daran anschliessenden Flanschbereichen (3, 4), **dadurch gekennzeichnet, dass** im dehnbaren Mittelabschnitt (2; 2') eine flache Kammer (8, 8'; 17) vorgesehen ist.

2. Dehnfugenband (1) nach Anspruch 1, **dadurch gekennzeichnet, dass** die flache Kammer (8, 8') von einer Trennschicht (9) gebildet ist.

3. Dehnfugenband nach Anspruch 2, **dadurch gekennzeichnet, dass** der Mittelabschnitt (2) und die Flanschbereichen (3, 4) von zwei einstückigen Bahnen (5, 6) aus einem Butyl-Elastomer geformt sind und die Flanschbereiche (3, 4) einen nicht-dehnbaren Kern (7) aus einem Copolymer beschichteten Substrat oder einem Glasfasersubstrat aufweisen.

4. Dehnfugenband nach Anspruch 2 oder 3, **dadurch gekennzeichnet, dass** der Mittelbereich (2) eine grössere Dicke als die Flanschbereiche (3, 4) aufweist.

5. Dehnfugenband nach einem der Ansprüche 2 bis 4, **dadurch gekennzeichnet, dass** im Mittelabschnitt (2) ein Substrat aus einem Quellmaterial (10) vorgesehen ist.

6. Dehnfugenband nach Anspruch 5, **dadurch gekennzeichnet, dass** das Quellmaterial (10) aus Natriumbentonit und Butylkautschuk, oder aus Acryl-Polymer, oder aus einer Kautschuk-Polymermischung besteht.

7. Dehnfugenband nach Anspruch 3 oder 4, dass zwischen den Bahnen (5, 6) aus einem Butyl-Elastomer und dem Kern (7) je eine Bahn (11, 12) aus einem Ethylen-Propylen-Dien-Kautschuk vorgesehen ist.

8. Dehnfugenband nach Anspruch 2 oder 3, **dadurch gekennzeichnet, dass** die flache Kammer (8") von einem nicht-haftenden oberen Substrat (13), welches einseitig an dem einen Flanschbereich (4) befestigt ist, und von einem nicht-haftenden unteren Substrat (14), welches einseitig an dem anderen Flanschbereich (3) befestigt ist, gebildet ist.

9. Dehnfugenband nach Anspruch 1, **dadurch gekennzeichnet, dass** der Mittelabschnitt (2') von Bahnen (15, 16) aus einem Elastomer oder Kunststoff gebildet ist, welche an den Randbereichen je einen nicht-dehnbaren Seitenstreifen (18, 19) aus Textil, einem dünnen Metallblech oder einem Copolymer beschichteten dünnen Metallblech einschliessen, um derart die flache Kammer (17) zu bilden.

10. Dehnfugenband nach Anspruch 9, **dadurch gekennzeichnet, dass** ein dünnes Metallblech (23) auf der Aussenseite eines der aus Elastomer oder Kunststoff bestehenden Bahnen (15, 16) als mechanischer Schutz für den Dehnbereich angeordnet ist.

11. Verfahren zur Herstellung eines Dehnfugenbandes nach einem der Ansprüche 1 bis 10, **dadurch gekennzeichnet, dass** zwei Bahnen (5, 6; 15, 16) aus elastischem Material aufeinandergelegt und durchlaufend in einer Rotations-Vulkanisationsanlage (30) unter einem Druck von 4 bis 6 bar und einer Temperatur von 150 bis 185 °C an den Flanschbereichen vulkanisiert werden.

12. Verfahren zur Herstellung eines Dehnfugenbandes nach einem der Ansprüche 1 bis 10, **dadurch gekennzeichnet, dass** zwei Bahnen (5, 6; 15, 16) aus elastischem Material aufeinandergelegt und abschnittsweise mittels einer zweiteiligen Quetschform (50) in einer hydraulischen Presse während einigen Minuten mit einem spezifischen Flächendruck von 20 bis 80 kg/cm² und einer Temperatur von 150 bis 185 °C an den Flanschbereichen vulkanisiert werden.

13. Verfahren zur Herstellung eines Dehnfugenbandes nach einem der Ansprüche 1 bis 10, **dadurch gekennzeichnet, dass** zwei Bahnen aus elastischem Material aufeinandergelegt und durchlaufend mittels einer Doppelbandpresse (40) bei einem Druck von 4 bis 6 bar und einer Temperatur von 150 bis 185 °C an den Flanschbereichen vulkanisiert werden.

14. Verfahren nach einem der Ansprüche 11 bis 13, **dadurch gekennzeichnet, dass** zwischen den beiden Bahnen (5, 6) eine Trennschicht (9) etwa mittig dazu angeordnet wird.
